## Europäisches Patentamt
## European Patent Office
## Office européen des brevets

(19)

(11) Veröffentlichungsnummer: **0 193 862**
**B1**

(12) **EUROPÄISCHE PATENTSCHRIFT**

(45) Veröffentlichungstag der Patentschrift:
**18.01.89**

(51) Int. Cl.⁴: **B 60 R 1/06**

(21) Anmeldenummer: **86102499.0**

(22) Anmeldetag: **26.02.86**

(54) **Fahrzeug mit einem Aussenspiegel.**

(30) Priorität: **08.03.85 DE 3508226**

(43) Veröffentlichungstag der Anmeldung:
**10.09.86 Patentblatt 86/37**

(45) Bekanntmachung des Hinweises auf die Patenterteilung:
**18.01.89 Patentblatt 89/3**

(84) Benannte Vertragsstaaten:
**DE FR GB IT**

(56) Entgegenhaltungen:
**DE-A- 3 248 759**
**FR-A- 2 392 847**
**FR-A- 2 570 038**

(73) Patentinhaber: **AUDI AG, Postfach 220,
D-8070 Ingolstadt (DE)**

(72) Erfinder: **Trübenbach, Karl, Dipl.-Ing.(FH), Am
Röthenfeld 39, D-8070 Ingolstadt (DE)**
Erfinder: **Salzer, Johann, Dipl.-Ing.(FH), Münchener
Strasse 59, D-8070 Ingolstadt (DE)**
Erfinder: **Engel, Wilfried, Dipl.-Ing.(FH),
Grimmstrasse 26, D-8070 Ingolstadt (DE)**

(74) Vertreter: **Engelhardt, Harald, Audi AG Postfach 2 20,
D-8070 Ingolstadt (DE)**

EP 0 193 862 B1

# Beschreibung

Die Erfindung bezieht sich auf ein Fahrzeug mit einem Aussenspiegel, dessen Fuss abklappbar und in einem Halteteil aufgenommen ist, wobei das Halteteil an einer Verstärkung innerhalb eines sich an den Aussenspiegel anschliessenden Karosseriebauteil des Fahrzeugs festgelegt ist.

Aus der DE-A-3 248 759 ist ein Bausatz für Fahrzeugaussenspiegel bekannt, mit welchem wahlweise Spiegelausführungen für die Fahrer- und Beifahrerseite sowohl für links- als auch für rechtsgesteuerte Fahrzeuge zusammensetzbar sind. Dieser Bausatz ist realisierbar bei Aussenspiegeln, welche eine das Spiegelglas haltende Schale und ein am Fahrzeug befestigtes Basisteil aufweisen, wobei beide Teile über eine Gelenkverbindung abklappbar miteinander verbunden sind. Der Bausatz umfasst neben der Schale und der Gelenkverbindung zwei verschiedene Basisteile für jeweils eine Fahrzeugseite sowie ein universelles oder mehrere verschiedene Einsatzelemente. Letztere dienen dazu, die Schale in den verschiedenen für die jeweilige Spiegelausführung nötigen Auskragwinkel gegenüber dem Basisteil zu fixieren.

Die bekannte Anordnung lässt sich nur bei Aussenspiegeln mit einer einzigen Gelenkverbindung einsetzen, um welche der Aussenspiegel bei einem Aufprall abklappt. Im Gegensatz zu den meist eingesetzten Doppelscharnieren (Pendeltürenprinzip) ist eine starke Einschränkung der Form der den Spiegel aufnehmenden Schale notwendig, damit die Schale beim Wegklappen nicht an der Karosserie anstösst. Für die jeweiligen Spiegelausführungen mit unterschiedlichem Auskragwinkel sind ausserdem verschiedene Kappen erforderlich, welche den Abstand zwischen der Schale und der Befestigungsplatte des Basisteils abdecken.

Von grossem Nachteil bei den bekannten Aussenspiegeln ist ausserdem, dass an das Endmontageband vier verschiedene Aussenspiegel angeliefert werden müssen. Im Bereich der Gelenkverbindung sind insbesondere durch das eingeschobene Einsatzelement viele Bauteile übereinander angeordnet, wodurch die Gefahr besteht, dass sich (beispielsweise durch Unebenheiten) ein Spiel einstellt, welches zu Vibrationen des Aussenspiegels führt.

Der Erfindung liegt die Aufgabe zugrunde, einen Aussenspiegel gemäss dem Oberbegriff des Anspruchs 1 so weiterzubilden, dass er als vormontiertes Bauteil wahlweise für links- und rechtsgesteuerte Fahrzeuge auf einer Seite einsetzbar ist.

Die Aufgabe wird durch die kennzeichnenden Merkmale des Anspruchs 1 gelöst.

Dadurch, dass das Halteteil, welches abklappbar den Fuss (welcher Teil des Spiegelgehäuses sein kann) des Aussenspiegels aufnimmt, wahlweise in zwei verschiedenen Winkelstellungen befestigbar ist, ist es ohne zusätzliche Bauteile möglich, den für das jeweilige Fahrzeug erforderlichen Auskragwinkel des Aussenspiegels festzulegen. Für die vier möglichen Varianten sind also nur zwei unterschiedliche Aussenspiegel erforderlich, welche komplett vormontiert angeliefert werden können. Eine Anpassung an den jeweiligen Auskragwinkel erfolgt nur dadurch, dass wahlweise die eine oder andere Befestigungsstelle zur Befestigung des Aussenspiegels herangezogen wird. Erfolgt die Befestigung beispielsweise durch je zwei Schrauben und zwei Muttern, dann müssen in einem Bauteil (Halteteil oder Verstärkung) zwei Aufnahmen für die Schrauben bzw. Muttern vorgesehen sein, im anderen Bauteil entsprechend vier, wobei je zwei alternativ belegt werden können.

Besonders vorteilhaft ist, wenn das Halteteil aus dem Karosseriebauteil nach aussen vorsteht und dieser Abschnitt ein flexibles Abdeckelement aufnimmt, welches die in dem Karosseriebauteil vorgesehene Aussparung zur Durchführung des Halteteils in jeder der beiden möglichen Einbaulagen abdeckt. Bei den unterschiedlichen Winkelstellungen des Halteteils kommt es zu einem Versatz zwischen dem Halteteil und dem anschliessenden Karosseriebauteil, wenn die Schwenkachse nicht senkrecht auf einer durch das Karosseriebauteil gebildeten Ebene steht, was in der Praxis fast ausschliesslich vorkommt. Dieser Versatz ist jedoch geringfügig, so dass er durch ein entsprechend gestaltetes, flexibles Abdeckelement ausgleichar ist. Somit ist durch ein gemeinsames Abdeckelement für beide Winkelstellungen ein einheitlich vormontierter Aussenspiegel möglich. Natürlich können auch unterschiedlich geformte Abdeckelemente zum Einsatz kommen. Diese werden dann vom Werker unmittelbar vor der Spiegelmontage von Hand aufgezogen werden, so dass auch hier keine unterschiedlichen Spiegel an das Montageband angeliefert werden müssten. Der Versatz wird um so grösser, je mehr der Winkel der Schwenkachse zum Karosseriebauteil von einem rechten Winkel abweicht. Ideal wäre deshalb eine rechtwinkelige Anordnung, welche jedoch oft aufgrund der festgelegten Lage des Aussenspiegels aber wegen Gesetzesvorschriften nicht möglich ist.

Bezüglich der Montage des erfindungsgemässen Aussenspiegels ist es von grossem Vorteil, wenn die Befestigungselemente des Halteteils von aussen festziehbar sind, wenn der Fuss des Aussenspiegels um einen Winkelbetrag abgeklappt wird. Gewöhnlich ist der Fuss des Aussenspiegels an die Kontur das Halteteils im Anschlussbereich angepasst. Sind die entsprechenden Querschnitte unrund oder liegt bei kreisrundem Querschnitt eine exzentrische Schwenkachse vor, dann wird beim Abklappen des Aussenspiegels — wie es ansonst bei einem Aufprall stattfindet — eine Fläche des Anschlussquerschnitts des Halteteils sichtbar. Werden von dieser Seite ausgehend die Befestigungselemente für das Halteteil mit einem Werkzeug zugänglich, dann ist eine Spiegelmontage alleinig von aussen möglich. Zweckmässig ist dabei, wenn das Halteteil die Aufnahmen für die Befestigungselemente beider Alternativen umfasst. Im Verstärkungsteil, welches von aussen ja nicht einsehbar ist, wären dann die Gegenstücke (z.B. Schweissmuttern) anzubringen.

Ein Ausführungsbeispiel der Erfindung ist in der Zeichnung dargestellt und wird nachfolgend näher beschrieben. Es zeigt

Fig. 1 einen Schnitt durch ein Halteteil für einen Aussenspiegel,

Fig. 2 einen zu dem Schnitt in Fig. 1 parallelen Schnitt durch das Halteteil,

Fig. 3 eine Draufsicht auf das Halteteil,

Fig. 4 den Schnitt IV-IV aus Fig. 3 und

Fig. 5 den Schnitt V-V aus Fig. 4.

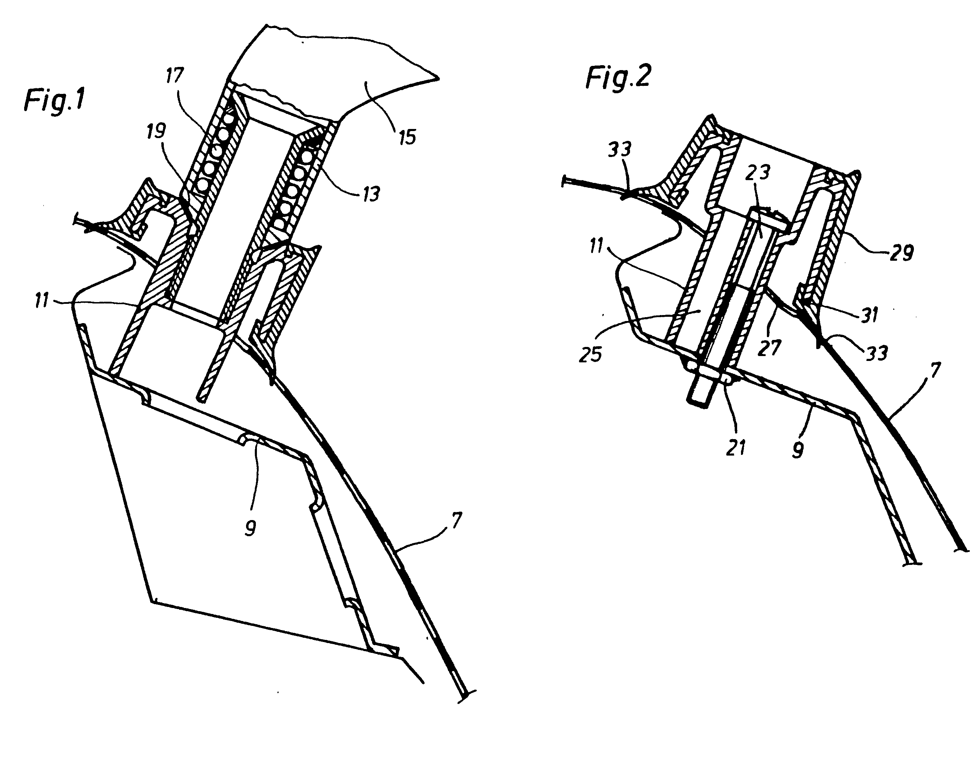

In der Schnittdarstellung gemäss Fig. 1 ist das Aussenblech einer Fahrzeugtür 7 mit einer Verstärkung 9 dargestellt. Die Verstärkung 9 dient der Befestigung eines Halteteiles 11, in dem der Fuss 13 eines Aussenspiegels 15 (nur teilweise dargestellt) aufgenommen ist.

Zur Reduzierung des Verletzungsrisikos ist der Aussenspiegel 15 derart mit dem Halteteil 11 verbunden, dass er bei einem Aufprall verschwenkt. Um dies zu ermöglichen und gleichzeitig eine definierte Lage des Aussenspiegels 15 sicherzustellen, wirkt auf den Fuss 13 des Aussenspiegel 15 eine Feder 17, welche den mit Vorsprüngen versehenen Fuss 13 in Längsnuten 19 des Halteteils 11 drückt.

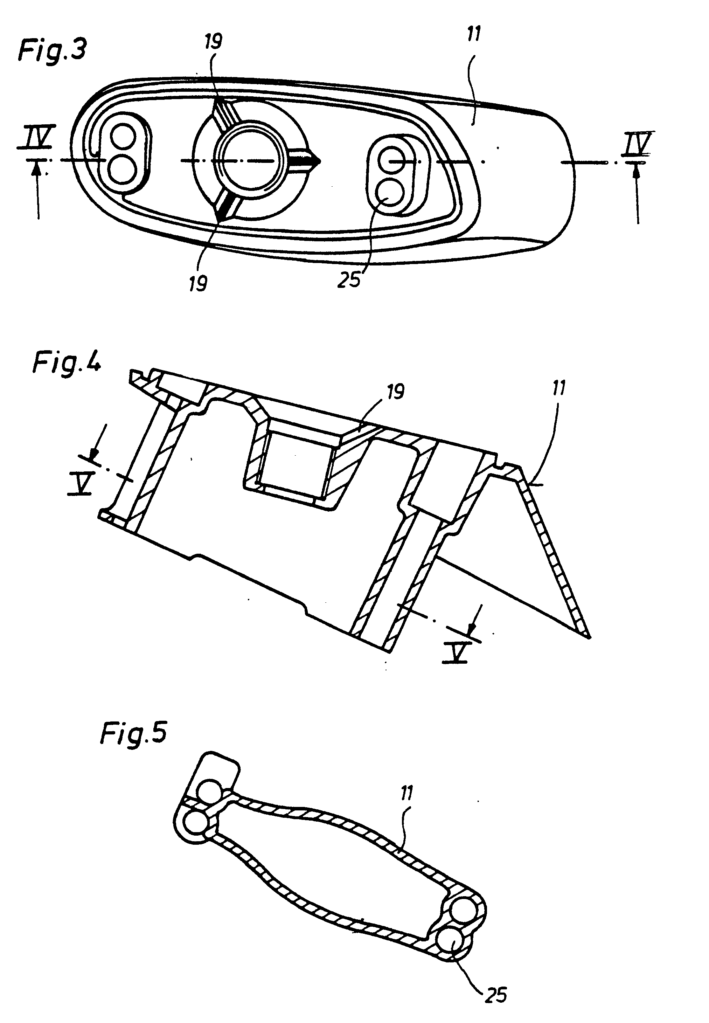

Aus der Schnittdarstellung gemäss Fig. 2 ist eine von zwei an der Verstärkung befestigten Schweissmuttern 21 zu erkennen. In die beiden Schweissmuttern 21 lässt sich je eine Schraube 23 zur Befestigung des Halteteiles 11 eindrehen. Dazu ist das Halteteil 11 mit je zwei nebeneinander angeordneten Bohrungen 25 versehen, wie dies aus Fig. 3 erkennbar ist. Die vier Bohrungen 25 sind mit den beiden Schweissmuttern 21 masslich so abgestimmt, dass das Halteteil 11 in zwei verschiedenen Winkelstellungen befestigbar ist, je nachdem welche Bohrungen 25 zur Befestigung mit den Schrauben 23 herangezogen werden. Durch diese Ausbildung ist es möglich, den Aussenspiegel 15 ohne irgendwelche Adaptationsteile wahlweise für links- und rechtgesteuerte Fahrzeuge einzusetzen.

Zur Durchführung des Halteteils 11 durch die Fahrzeugtüre 7 ist diese mit einer Aussparung 27 versehen. Das Halteteil 11 nimmt formschlüssig eine Abdeckung 29 aus gummielastischem Material auf, welche die Aussparung unabhängig von der gewählten Winkeleinstellung des Halteteils 11 stets abdeckt. Da die Verstärkung 9 im Anlagebereich des Halteteils 11 nicht parallel zur Aussenkontur der Fahrzeugtüre 7 im Bereich der Anlage der Abdeckung 29 verläuft, nimmt der umlaufende Rand 31 des Halteteils 11 je nach der gewählten Winkestellung einen unterschiedlichen Abstand zum Aussenblech der Fahrzeugtüre 7 ein. Dieser Betrag wird jedoch durch die an der Abdeckung 29 angeformten Lippen 33 ausgeglichen, so dass stets eine saubere Anlage der Abdeckung 29 an der Fahrzeugtüre 7 vorliegt.

Die Fig. 3 zeigt das Halteteil 11 in Draufsicht, wobei neben den in Fig. 2 dargestellten Bohrungen zwei diametral gegenüberliegende Bohrungspaare erkennbar sind. Je nachdem welcher Auskragwinkel gefordert ist, werden in die einen oder anderen gegenüberliegenden Bohrungen die Schrauben 23 eingeführt und in die Schweissmuttern 21 eingedreht.

Wie aus Fig. 3 unmittelbar ersichtlich, ist das Halteteil 11 im Anlagebereich des Fusses 13 länglich ausgeführt. Wird der Aussenspiegel 15 abgeklappt, dann werden die Befestigungsbohrungen zugänglich und der Aussenspiegel kann alleinig von aussen befestigt werden. Diese Ausbildung ermöglicht auch, dass der Aussenspiegel 15 mit seinem Fuss 13 sowie das Halteteil 11 und die Abdeckung 29 als eine vormontierte Baugruppe angeliefert werden können.

## Patentansprüche

1. Fahrzeug mit einem Aussenspiegel (15), dessen Fuss (13) abklappbar in einem Halteteil (11) aufgenommen ist, wobei das Halteteil (11) an einer Verstärkung (9) innerhalb eines sich an den Aussenspiegel (15) anschliessenden Karosseriebauteil des Fahrzeugs festgelegt ist, dadurch gekennzeichnet, dass zum Einsatz des Aussenspiegels (15) als Fahrer- oder Beifahrerspiegel das Halteteil (11) am Verstärkungsteil (9) wahlweise in zwei verschiedenen Winkelstellungen befestigbar ist.

2. Fahrzeug nach Anspruch 1, dadurch gekennzeichnet, dass das Halteteil (11) aus dem Karosseriebauteil (7) nach aussen vorsteht und dieser Abschnitt ein flexibles Abdeckelement (29) aufnimmt, welches die in dem Karosseriebauteil (7) vorgesehene Aussparung (27) zur Durchführung des Halteteils (11) in jeder der beiden möglichen Einbaulagen abdeckt.

3. Fahrzeug nach Anspruch 1 oder 2, dadurch gekennzeichnet, dass die Befestigungselemente (23) des Halteteils (11) von aussen festziehbar sind, wenn der Fuss (13) des Aussenspiegels (15) um einen bestimmten Winkelbetrag abgeklappt wird.

## Claims

1. Motor vehicle with an external mirror (15) the stem (13) of which is seated in a holding section (11) so that it is slewable, the holding section (11) being fixed to a reinforcement (9) within a body component of the motor vehicle adjacent to the external mirror (15), characterized in that in order to use the external mirror (15) as a driver- or passenger-mirror the holding section (11) can be secured optionally in two different angular positions at the reinforcement section (9).

2. Motor vehicle according to claim 1, characterized in that the holding section (11) projects outwards from the vehicle body component (7) and this part has a flexible covering element (29) which covers the opening (27) provided in the vehicle body component (7) for passing through the holding section (11) in each of the two possible installation positions.

3. Motor vehicle according to claim 1 or 2, characterized in that the securing elements (23) of the holding section (11) can be tightened from outside when the stem (13) of the external mirror (15) is slewed through a certain angle.

## Revendications

1. Véhicule équipé d'un rétroviseur extérieur (15) dont la pied (13) est reçu de manière rabattable dans un élément de support (11), l'élément de support (11) étant fixé à un renfort (9) à l'intérieur d'un élément de construction de la carrosserie du véhicule contigu au rétroviseur extérieur (15), caractérisé en ce qu'en vue de l'utilisation du rétroviseur extérieur (15) comme rétroviseur du conducteur ou de passager, l'élément de support (11) peut être fixé au choix dans deux positions angulaires différentes à l'élément de renfort (9).

2. Véhicule selon la revendication 1, caractérisé en ce que l'élément de support (11) fait saillie vers l'extérieur à partir de l'élément de construction de la carrosserie (7) et cette partie saillante reçoit un élément de recouvrement flexible (29) qui masque, dans chacune des deux positions de montage possibles, l'évidement (27) prévu dans l'élément de construction de la carrosserie (7) pour le passage de l'élément de support (11).

3. Véhicule selon la revendication 1 ou 2, caractérisé en ce que les éléments de fixation (23) de l'élément de support (11) peuvent être serrés de l'extérieur lorsque le pied (13) du rétroviseur extérieur (15) a été rabattu d'un angle déterminé.

*Fig.1*

*Fig.2*

EP 0 193 862 B1

**Fig.3**

**Fig.4**

**Fig.5**